# EUROPEAN PATENT SPECIFICATION

(11) **EP 1 826 854 B1**
(45) Date of publication and mention of the grant of the patent: **07.09.2011**
(21) Application number: 06110481.6
(22) Date of filing: 28.02.2006
(51) Int. Cl.: H01M 8/04

(54) **Mixing tank for a fuel cell system**
Tank zum Mischen für ein Brennstoffzellensystem
Réservoir de mélange pour un système de pile à combustible

(43) Date of publication of application: 29.08.2007
(73) Proprietor: Samsung SDI Germany GmbH, 12459 Berlin (DE); Samsung SDI Co., Ltd., Suwon-si Gyeonggi-do (KR)
(72) Inventor: Larrain, Diego, 10999, Berlin (DE)
(74) Representative: Hengelhaupt, Jürgen

(56) References cited:
- US-A1- 2003 095 872
- US-A1- 2003 148 166
- US-A1- 2004 131 898
- US-A1- 2006 024 552

## Description

The invention relates to a device for mixing and storing fuel and water in a fuel cell system.

In particular, the invention relates to a device for mixing and storing fuel and water in a Direct Methanol Fuel Cell System (DMFC system) for portable applications.

A fuel cell system usually comprises a fuel cell stack, a heat exchanger, a water separator, a mixer, a carbon dioxide separator and a tank.

In a fuel cell system, concentrated fuel and pure water have to be mixed to the fuel mixture. For this purpose water separated in a water separator and fuel from a tank are fed through an inlet into a mixer. In the mixer fuel and water are mixed to the fuel and water mixture coming out of the carbon dioxide separator and stored. Through an outlet of the mixer the mix of fuel and water streams to the stack.

A DMFC principle disclosed by the documents US 2004/0166389 A1 and US 2004/0062964 A1. is shown in figure 1. A DMFC fuel cell stack (10) comprises a cathode air inlet (11) and a cathode air outlet (13). The air pump (12) supplies reaction air to the stack cathode through the cathode air inlet (11). The DMFC fuel cell stack (10) works with a so-called fuel stream composed of water and methanol on the anode side and with a so-called oxidant stream (air or oxygen) on the cathode side. The DMFC stack directly produces electricity in an electrochemical reaction. The membrane (14) of the stack is permeable to water and thus the operation of the stack generates a transfer of water from the anode side to the cathode side via electro-osmotic drag. In order to use a concentrated fuel and minimise the volume of the fuel tank (30), the recovery of this water is essential to the system. The heat-exchanger (50) is used to condensate the water from the cathode air outlet (13). This water has to be separated in a water separator (60) and has to be re-inserted in the so-called anode circuit (18). The air exits the separator at the venting openings (61). The liquid outlet (62) of the water-separator (60) is connected to the main anode circuit (18). The anode fuel circuit is composed of a circulation pump (23) feeding the fuel mixture to the stack anode inlet (15), of a carbon dioxide separator device (20) and of a mixer (40) where the concentrated fuel and the water recovered from the heat exchanger are fed to the loop through their respective water connection (64) and fuel connection (32). A driving force is necessary to feed the water recovered; therefore the schematic exhibits a pump for the water recovery (63). US 2003/0095872 A1 refers to another conventional direct methanol fuel cell system. JP 2002075415 deals about a solid polymer fuel cell device including among others a hydrogencontaining bag equipped with a hydrogen-injecting opening connected to a fuel in-take side and an escape valve for preventing air from flowing in at a fuel outlet side.

A device combining the function of a carbon dioxide separator, a water-separator, a mixer and a tank are described in the documents EP 1 383 190 and EP 1 383 191 A1. The principle of this device is shown in figure 2. The inlet stream of water/air (101) is located on the top part of the device. The liquid water is separated by gravity (106) and falls to the bottom of the device. The inlet stream of fuel is located at the bottom of the device (102) which works as a liquid hold-up tank. The gases from the incoming stream exit the device through an outlet vent (104) which is composed of a liquid-tight gas permeable membrane. The liquid mixture exits the device through the outlet (103) and flows to the stack. Regarding the combination of the function of mixer and tank the problem arises that operation of the device is dependent on the orientation, so that the use in a portable system is restricted to one position. That is, the devices disclosed in the documents EP 1 383 190 and EP 1 383 191 A1 work only in the up-right position which makes a use in a tilted or in an over-head position either impossible or requires additional safety installations protecting the device against dysfunction.

Additionally, the functional principle (combination of carbon dioxide separator, water-separator, mixer and tank) of the device leads to a significant volume and to a large height that makes it difficult to integrate the DMFC system in a laptop docking station or in a battery-like system.

### Object of the invention

Therefore the object of the invention is to create a device for mixing and storing fuel and water, which is orientation independent and which has a small volume. Further, in spite of the small volume the device should make it possible to compensate different flow volumes between the inlet and the outlet of the device.

### Summary of the invention

According to the invention a device is created for mixing and storing fuel and water in a fuel cell system with at least one inlet means for fuel and / or water and at least one outlet means for feeding of fuel and water to a fuel cell, wherein said inlet means and outlet means are connected to a flexible chamber in which the fluids are mixed and temporally stored. The ratio of length, width and height of the flexible chamber filled with fluid can be different and the volume of the flexible chamber is changed depending on the difference of inlet flow volume and outlet flow volume.

Water and fuel are fed through at least one inlet into the flexible chamber. On the flexible chamber a first and a second inlet can be provided. In this case, water streams through the first inlet into the flexible chamber and fuel streams through the second inlet into the flexible chamber.

It is also possible that the device of the present invention is arranged downstream of a junction where a main flow (for instance a mixture of water and fuel and a secondary flow (for instance fuel) are connected in such a manner that a two components fluid consisting of fuel and water streams through the inlet into the flexible chamber.

In the flexible chamber the two-component fluid is mixed and a mix of the fluids leaves the chamber through the outlet.

The flow volume of the inlet may be different from the flow volume of the outlet. Due to the flexibility of the chamber, the device of the the present invention allows to store a variable volume and thus to compensate different flow volumes of the inlet and outlet means. If the inlet flow volume becomes smaller than the outlet flow volume, the volume of the flexible chamber decreases to a minimum.

By contrast, if the outlet flow volume becomes smaller than the inlet flow volume, the volume of the flexible chamber increases.

The ratio of length, width and height of the flexible chamber filled with fluid can be different. Due to the use of a flexible chamber only a very small pressure is necessary to expand or to contract the mixing tank, therefore pressure levels in the fuel cell system are not influenced by the device.

The device of the present invention can be used in every orientation.

Furthermore, the device of the present invention is easy to produce and production costs of the device are low.

According to the present invention the inlet means and the outlet means of the device are integral parts of a tube which is arranged at least partially inside the flexible chamber, wherein at least one aperture is situated on the surface of the tube inside the flexible chamber is which allows the fluid to stream from the tube into the flexible chamber and to stream back from the flexible chamber into the tube. Between the tube and the flexible chamber a sealing for preventing leakage is applied.

In this embodiment the fluids are mixed in the tube and at a higher flow volume of the inlet than the flow volume of the outlet the fluids stream from the tube through apertures into the flexible chamber. Due to the arrangement of one or more apertures eddies are created which cause a further mixing of the fluids.

Preferably the flexible chamber is a bag.

Preferably the flexible chamber is made of a bendable material. Due to the use of a bendable material the maximum volume of the flexible chamber can be larger than the design volume of the flexible chamber if the flow volume of the inlet is higher than the flow volume of the outlet and if there is no limitation of the space surrounding the flexible chamber.

Further it is preferred that the flexible chamber filled with fluid has essentially a cuboid shape or a prismatic shape. As a matter of course, the flexible chamber may have any spatial shape.

The device of the present invention can comprise bending lines in at least two walls of the flexible chamber. Thereby a defined shape is achieved if the volume of the flexible chamber decreases.

In preferred embodiments the tube inside the flexible chamber is not straight. In one embodiment the ends of the tube are arranged in an angle of 90°. Alternatively, the tube inside the flexible chamber is bent into U-shape.
In these embodiments the tube inside the flexible chamber is longer than a straight tube and therefore it is possible to arrange more apertures in the tube allowing the fluids to mix and to stream from the tube into the flexible chamber and reverse.

The flexible chamber can be produced of such a material that its volume corresponds to the volume of the walls fold together when void of fluid, i.e. if a tube is arranged inside the flexible chamber, the volume of the device is nearly the same as the volume of the tube situated inside the flexible chamber.

In a preferred embodiment the flexible chamber has essentially the shape of a folding bellows. The advantage of this embodiment lies in a defined shape of the flexible chamber in a filled and in a void state as well as a large volume of the device on a small base.

The flexible chamber can be made of thin plastic material, for instance Light Densitiy Polyethylene (LDPE) with low density and a thickness between 20 and 200µm.

Furthermore, a fuel cell system can be provided, comprising a fuel cell stack, a water reservoir, a fuel tank and a device for mixing and storing fuel and water in a fuel cell system with at least one inlet means for fuel and / or water and at least one outlet means for a mixture of fuel and water, wherein said inlet means and outlet means are connected to a flexible chamber in which the fluids are mixed and temporally stored.

The mixer-tank may be integrated in the anode circuit of the fuel cell system. Also, the mixing tank may be arranged upstream from a circulation pump in the fuel cell system.

### Brief description of the drawings

The present invention will now be described by way of example with reference to the accompanying drawings, in which:
- Fig.1: shows a Direct Methanol Fuel Cell System according to the prior art;
- Fig.2: shows a device combining the function of carbon dioxide separator, water separator, mixer and tank according to the prior art;
- Fig.3: shows an embodiment of the invention wherein only an inlet and an outlet are connected to the flexible chamber;
- Fig.4: shows the preferred embodiment of the present invention in a filled state;
- Fig.5: shows an embodiment of the present invention with a junction;
- Fig.6: shows an embodiment of the invention without fluid inside;
- Fig.7: shows an embodiment of the invention with a tube bended in U-shape;
- Fig.8: shows an embodiment of the invention with a tube ends into at an angle of 90°;
- Fig.9: shows an embodiment of the invention with a folding bellows as a flexible chamber.

### Detailed description of the embodiments

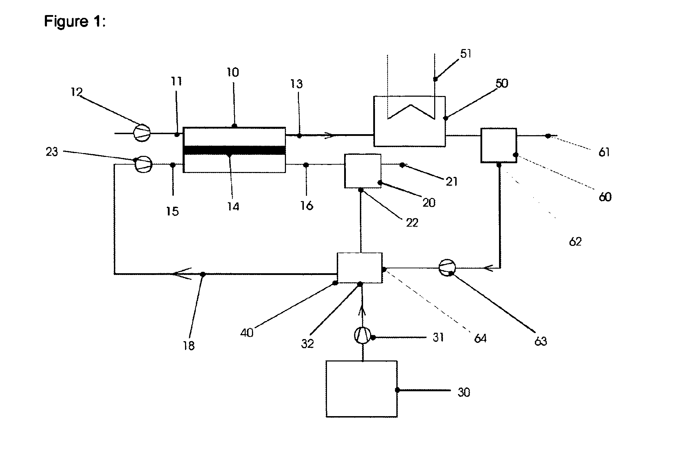

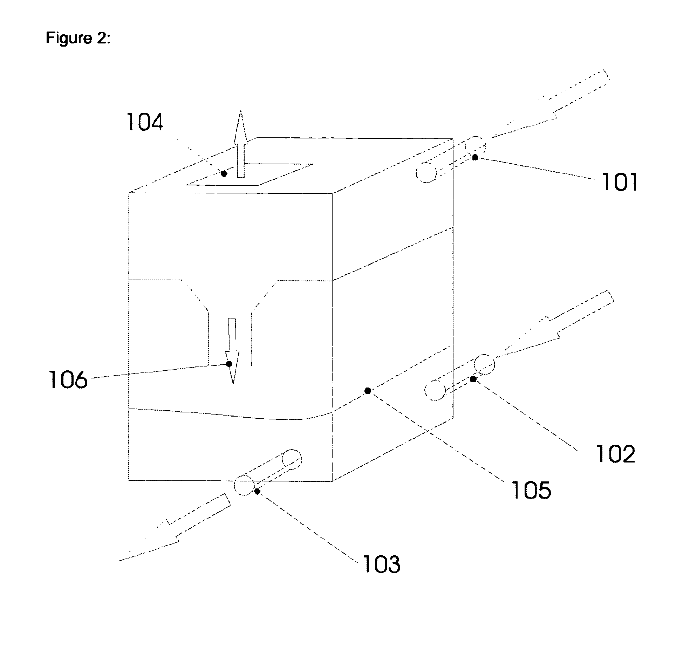

In figures 1 and 2 prior art is shown (see above).

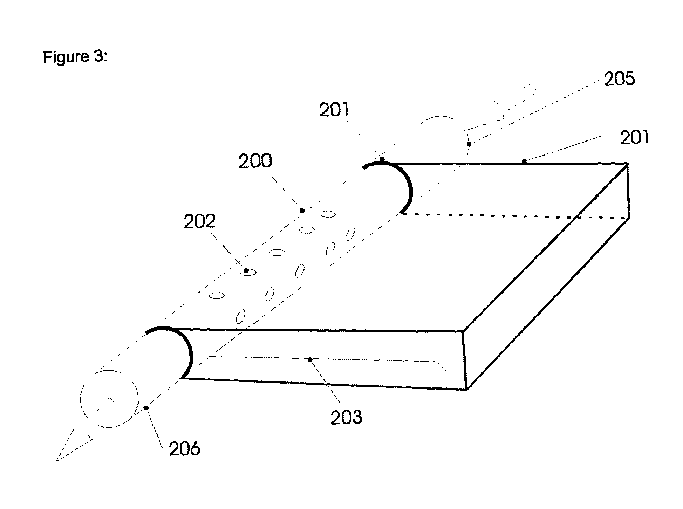

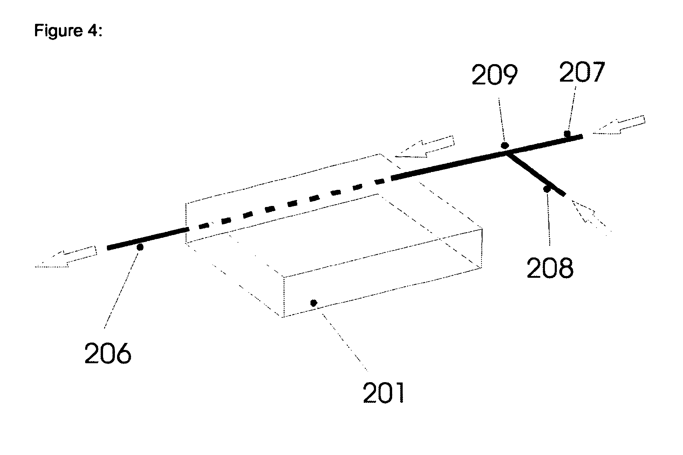

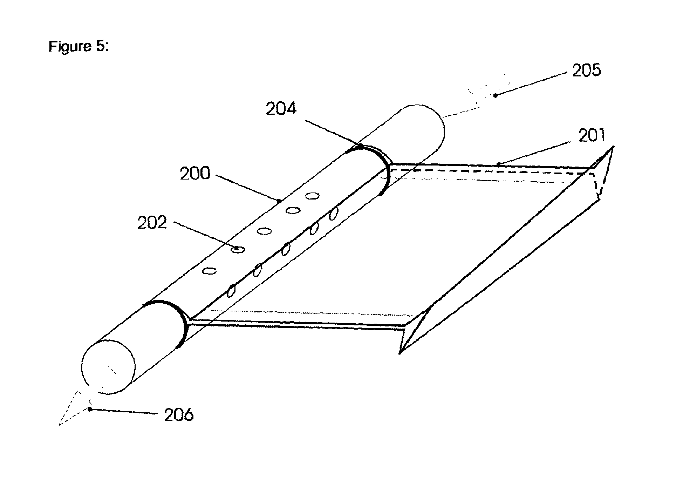

In fig. 3 the general principle of the invention is shown and in fig. 4 the main idea of the invention is shown.
Fig. 3 shows the general principle of the invention, i.e. a flexible chamber which is connected to an inlet (205) and an outlet (206). In this embodiment of the invention fuel and water stream through the inlet (205) into the flexible chamber (201) where the fluids are mixed and stored and flow out through the outlet (206).
The inlet (205) and the outlet (206) are connected to a flexible chamber (201). In fig. 4 further a supporting tube (200) is shown which is connected to the inlet (205) and to the outlet (206). Alternatively, inlet means (205) and outlet means (206) can be parts of the tube (200). The tube (200) is perforated with apertures (200). On the connection of the tube (200) and the flexible chamber (201) a sealing (204) for preventing leakage is applied. In at least two walls of the flexible chamber a predefined bending line is arranged. The bending line causes a predefined shape of the chamber in a void state (see fig. 5). As shown in fig. 4 the flexible chamber (201) has a cuboid shape in a filled state. It is obvious that the tube (200) may be also arranged in the middle of the flexible chamber (201).
Water and fuel stream through the inlet (205) into the tube (200). When the flow volume flowing through the inlet (205) is greater than the flow volume flowing through the outlet (206) the fluids flow from the tube (200) through the apertures (202) into the flexible chamber (201). Due to the arrangement of a plurality of holes (202) eddies are created which cause a mixing of the fluids.
At a higher rate of flow volume in the outlet (206) the fluid inside the chamber (201) streams through the apertures (202) back into the tube (200) and leaves the device through the outlet (206).

In fig. 5 a junction (209) is shown. One arm of the junction (209) can be used as a water and fuel mixture inlet (207) and the other arm of the junction (209) can be used as a fuel inlet (208). If a junction (209) is provided on the inlet, the water and the fuel flow are mixed already in the tube (200).

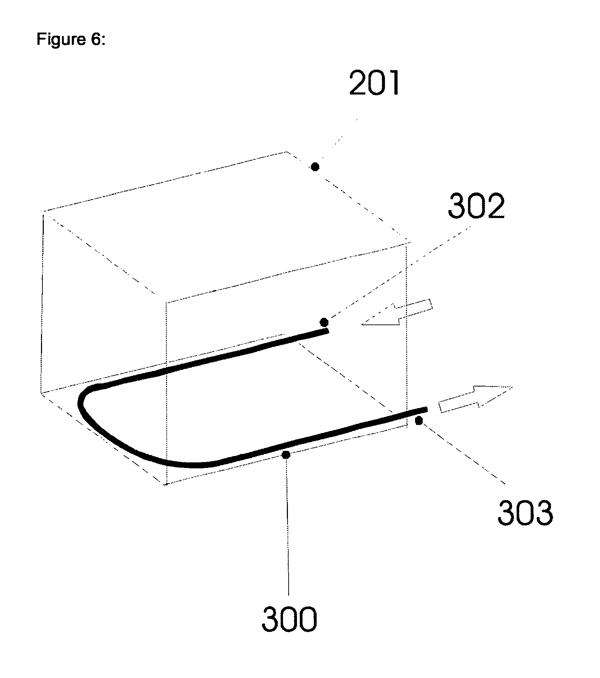

In fig. 6 the preferred embodiment of the present invention in a void state is shown. As shown in this figure the flexible chamber (201) folded on the predefined bending lines (203) has nearly a flat shape.

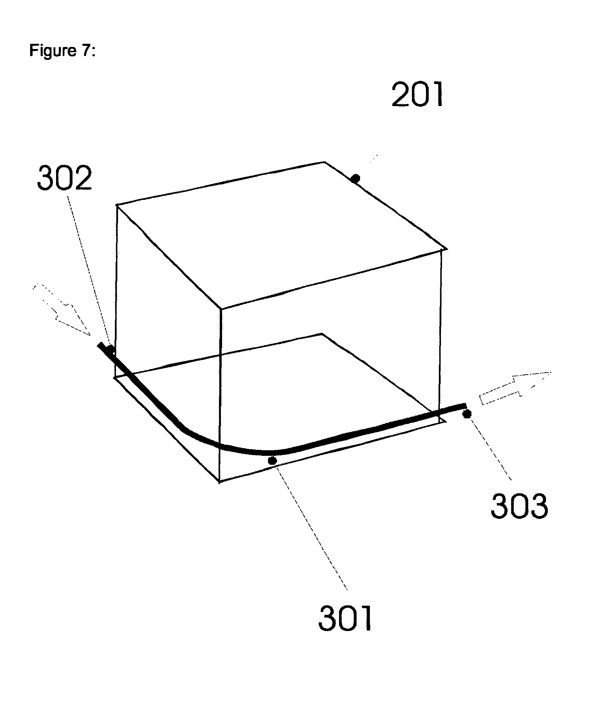

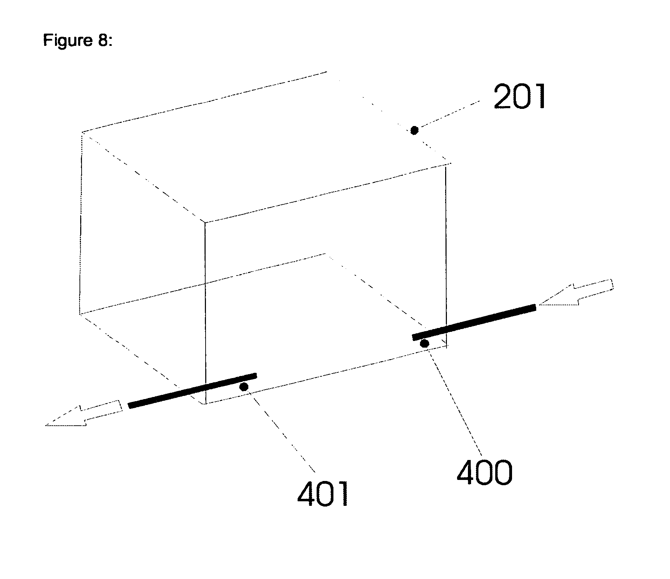

In fig. 7 a tube (300) with an U-shape is shown.
An alternative embodiment is shown in fig.8 where the ends of a tube (301) are bent into an angle of 90°.
If the tube (300) is bent into a U-shape inlet and outlet means (302, 303) are arranged on the same surface of the flexible chamber (201). If the tube (301) is bent at an angle of 90° inlet and outlet means (302, 303) are arranged on adjacent surfaces of the flexible chamber (201).

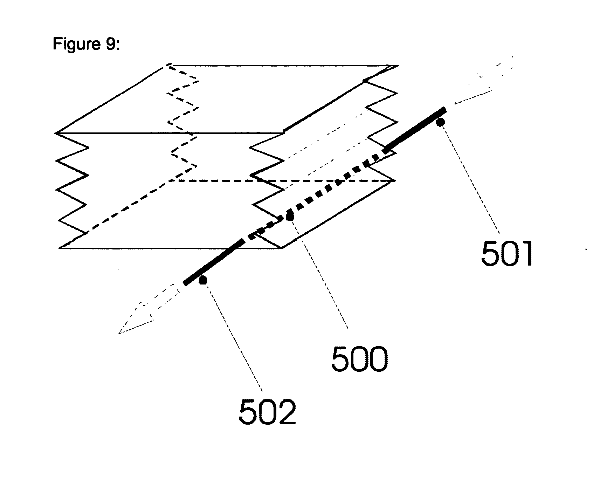

Fig. 9 shows a flexible chamber (500) which is designed as a folding bellows. It is obvious that the shape of the flexible chamber (500) must not be a cuboid as shown in fig. 9, but it can also have the shape of a cylinder or any other spatial shapes . Even in this embodiment a tube can be arranged inside the device.

### List of Reference Signs

| | |
|---|---|
| 10 | DMFC fuel cell stack |
| 11 | Stack cathode air inlet |
| 12 | Air pump |
| 13 | Stack cathode air outlet |
| 14 | Membrane |
| 15 | Stack anode inlet |
| 16 | Stack anode outlet |
| 18 | Anode circuit |
| 20 | carbon dioxide separator |
| 21 | carbon dioxide separator gas outlet |
| 22 | carbon dioxide separator liquid outlet |
| 23 | Circulation pump |
| 30 | Fuel tank |
| 31 | Fuel pump |
| 32 | Fuel connection to the mixer |
| 40 | Mixer |
| 50 | Heat exchanger |
| 52 | Heat exchanger outlet |
| 55 | Fan |
| 60 | Water separator |
| 61 | Water separator air outlet |
| 62 | Water separator liquid outlet |
| 63 | Pump for the water recovery |
| 64 | Water connection to the mixer |
| 70 | Water feedback pump |
| 101 | Inlet stream of water/air |
| 102 | Inlet stream of fuel |
| 103 | Outlet stream of fuel |
| 104 | Outlet vent for gases |
| 105 | Fuel mixture level |
| 106 | Water |
| 200 | Tube |
| 201 | Flexible chamber |
| 202 | Aperture |
| 203 | Predefined bending line |
| 204 | Sealing |
| 205 | Inlet |
| 206 | Outlet |
| 207 | Main inlet |
| 208 | Secondary inlet |
| 209 | Junction |
| 300 | U-turn shape tube |
| 301 | Bended tube |
| 302 | Inlet |
| 303 | Outlet |
| 500 | Bellows-like flexible chamber |
| 501 | Inlet |
| 502 | Outlet |

## Claims

1. Device for mixing and storing fuel and water in a fuel cell system with at least one inlet means (205, 302, 501) for fuel and / or water and at least one outlet means (206, 303, 502) for feeding fuel and water to a fuel cell, **characterized in that** said inlet means (205, 302, 501) and outlet means (206, 303, 502) are connected to a flexible chamber (201) in which the fluids are mixed and temporally stored, wherein the ratio of length, width and height of the flexible chamber (201) filled with fluid can be different and the volume of the flexible chamber (201) is changed depending on the difference of inlet flow volume and outlet flow volume and wherein the inlet means (205, 302, 501) and the outlet means (206, 303, 502) are integral parts of a tube (200) which is arranged at least partially inside the flexible chamber (201), wherein at least one aperture (202) is situated on the surface of the tube (200) inside the chamber which allows the fluid to stream from the tube (200) into the chamber (201) and to stream back from the chamber (201) into the tube (200).

2. Device for mixing and storing fuel and water as claimed in any of the preceding claims, wherein the flexible chamber (201) consists of a bag.

3. Device for mixing and storing fuel and water as claimed in any of the preceding claims, wherein the flexible chamber (201) is made of a bendable material.

4. Device for mixing and storing fuel and water as claimed in any of the preceding claims, wherein the flexible chamber (201) filled with fluid has essentially a cuboid shape.

5. Device for mixing and storing fuel and water as claimed in any of the preceding claims, wherein the flexible chamber (201) filled with fluid has essentially a prismatic shape.

6. Device for mixing and storing fuel and water as claimed in any of the preceding claims, where in at least two walls of the flexible chamber (201) bending lines (203) are provided.

7. Device for mixing and storing fuel and water as claimed in any of the preceding claims, wherein the ends of a tube (301) inside the flexible chamber (201) are arranged in an angle of 90°.

8. Device for mixing and storing fuel and water of any of the preceding claims, wherein the tube (300) inside the flexible chamber (201) has essentially a U-shape.

9. Device for mixing and storing fuel and water as claimed in claim 1, wherein the volume on the inside of the flexible chamber (201) not filled with fluid is essentially the same as the volume of the tube (200) inside the chamber.

10. Device for mixing and storing fuel and water as claimed in any of the preceding claims, wherein the flexible chamber (201) has essentially the shape of a folding bellows (500).

11. Fuel cell system, comprising a fuel cell stack, a water reservoir and a fuel tank, **characterized in that** the fuel cell system further comprises a device for mixing and storing fuel and water of any of claims 1 through 10.

## Patentansprüche

1. Vorrichtung zum Mischen und Lagern von Brennstoff und Wasser in einem Brennstoffzellensystem mit zumindest einem Einlassmittel (205, 302, 501) für Brennstoff und/oder Wasser und zumindest einem Auslassmittel (206, 303, 502) zur Zuführung von Brennstoff und Wasser zu einer Brennstoffzelle, **dadurch gekennzeichnet, dass** das besagte Einlassmittel (205, 302, 501) und Auslassmittel (206, 303, 502) mit einer flexiblen Kammer (201) verbunden sind, in der die Flüssigkeiten gemischt und vorübergehend gelagert werden, wobei das Verhältnis von Länge, Breite und Höhe der mit Flüssigkeit gefüllten flexiblen Kammer (201) differieren kann und sich das Volumen der flexiblen Kammer (201) je nach der Differenz zwischen dem Einlassströmungsvolumen und dem Auslassströmungsvolumen ändert, und wobei das Einlassmittel (205, 302, 501) und das Auslassmittel (206, 303, 502) Bestandteile eines Rohres (200) sind, das zumindest teilweise in der flexiblen Kammer (201) angeordnet ist, wobei sich zumindest eine Öffnung (202) auf der Oberfläche des Rohres (202) in der Kammer befindet, durch die die Flüssigkeit vom Rohr (200) in die Kammer (201) strömen kann und aus der Kammer (201) zurück in das Rohr (200) strömen kann.

2. Vorrichtung zum Mischen und Lagern von Brennstoff und Wasser nach einem der vorhergehenden Ansprüche, wobei die flexible Kammer (201) aus einer Tasche besteht.

3. Vorrichtung zum Mischen und Lagern von Brennstoff und Wasser nach einem der vorhergehenden Ansprüche, wobei die flexible Kammer (201) aus einem biegsamen Material hergestellt ist.

4. Vorrichtung zum Mischen und Lagern von Brennstoff und Wasser nach einem der vorhergehenden Ansprüche, wobei die mit Flüssigkeit gefüllte flexible Kammer (201) im Wesentlichen eine Quaderform aufweist.

5. Vorrichtung zum Mischen und Lagern von Brennstoff und Wasser nach einem der vorhergehenden Ansprüche, wobei die mit Flüssigkeit gefüllte flexible Kammer (201) im Wesentlichen eine Prismenform aufweist.

6. Vorrichtung zum Mischen und Lagern von Brennstoff und Wasser nach einem der vorhergehenden Ansprüche, wobei in zumindest zwei Wänden der flexiblen Kammer (201) Biegelinien (203) bereitgestellt werden.

7. Vorrichtung zum Mischen und Lagern von Brennstoff und Wasser nach einem der vorhergehenden Ansprüche, wobei die Enden eines Rohres (301) in der flexiblen Kammer (201) in einem Winkel von 90° angeordnet sind.

8. Vorrichtung zum Mischen und Lagern von Brennstoff und Wasser nach einem der vorhergehenden Ansprüche, wobei das Rohr (300) in der flexiblen Kammer (201) im Wesentlichen eine U-Form aufweist.

9. Vorrichtung zum Mischen und Lagern von Brennstoff und Wasser nach Anspruch 1, wobei das Volumen in der flexiblen Kammer (201), die nicht mit Flüssigkeit gefüllt ist, im Wesentlichen dem Volumen des Rohres (200) in der Kammer entspricht.

10. Vorrichtung zum Mischen und Lagern von Brennstoff und Wasser nach einem der vorhergehenden Ansprüche, wobei die flexible Kammer (201) im Wesentlichen die Form eines Faltenbalgs (500) aufweist.

11. Brennstoffsystem, aufweisend einen Brennstoffzellenstapel, einen Wasserbehälter und einen Brennstofftank, **dadurch gekennzeichnet, dass** das Brennstoffzellensystem weiterhin eine Vorrichtung zum Mischen und Lagern von Brennstoff und Wasser nach einem der Ansprüche 1 bis 10 aufweist.

## Revendications

1. Dispositif pour mélanger et stocker du combustible et de l'eau dans un système de pile à combustible avec au moins des moyens d'entrée (205, 302, 501) pour le combustible et/ou l'eau et au moins des moyens de sortie (206, 303, 502) pour alimenter en combustible et en eau une pile à combustible, **caractérisé en ce que**
lesdits moyens (205, 302, 501) d'entrée et moyens (206, 303, 502) de sortie sont reliés à une chambre (201) souple dans laquelle les fluides sont mélangés et provisoirement stockés, dans lequel le rapport de longueur, largeur et hauteur de la chambre (201) souple remplie de fluide peut être différent et le volume de la chambre (201) souple est modifié en fonction de la différence en termes de volume de flux d'entrée et de volume de flux de sortie et dans lequel les moyens (205 , 302, 501) d'entrée et les moyens (206, 303, 502) de sortie sont des parties intégrantes d'un tube (200) qui est agencé au moins partiellement à l'intérieur de la chambre (201) souple, dans lequel au moins une ouverture (202) est située sur la surface du tube (200) à l'intérieur de la chambre ce qui permet au fluide de s'écouler du tube (200) dans la chambre (201) et de revenir de la chambre (201) au tube (200).

2. Dispositif destiné à mélanger et stocker du combustible et de l'eau selon l'une des revendications précédentes, dans lequel la chambre (201) souple est un sac.

3. Dispositif destiné à mélanger et stocker du combustible et de l'eau tel que revendiqué dans l'une des revendications précédentes, dans lequel la chambre (201) souple est réalisée en un matériau pliable.

4. Dispositif destiné à mélanger et stocker du combustible et de l'eau tel que revendiqué dans l'une des revendications précédentes, dans lequel la forme de la chambre (201) souple remplie de fluide est essentiellement cuboïde.

5. Dispositif destiné à mélanger et stocker du combustible et de l'eau tel que revendiqué dans l'une des revendications précédentes, dans lequel la forme de la chambre (201) souple remplie de fluide est essentiellement prismatique.

6. Dispositif destiné à mélanger et stocker du combustible et de l'eau tel que revendiqué dans l'une des revendications précédentes, dans lequel des lignes (203) de pliage sont prévues dans au moins deux parois de la chambre (201) souple.

7. Dispositif destiné à mélanger et stocker du combustible et de l'eau selon l'une des revendications précédentes, dans lequel les extrémités d'un tube (301) à l'intérieur de la chambre (201) souple sont agencées à un angle de 90°.

8. Dispositif destiné à mélanger et stocker du combustible et de l'eau de l'une des revendications précédentes, dans lequel la forme du tube (300) dans la chambre (201) souple est essentiellement en U.

9. Dispositif destiné à mélanger et stocker du combustible et de l'eau selon la revendication 1, dans lequel le volume dans la chambre (201) souple non remplie de fluide est sensiblement le même que le volume du tube (200) dans la chambre.

10. Dispositif destiné à mélanger et stocker du combustible et de l'eau selon l'une des revendications précédentes, dans lequel la chambre (201) souple a essentiellement la forme d'un soufflet pliable (500).

11. Système de pile à combustible, comprenant un empilement de piles à combustible, un réservoir d'eau et un réservoir de combustible, **caractérisé en ce que** le système de pile à combustible comprend en outre un dispositif de mélange et de stockage de combustible et d'eau de l'une des revendications 1 à 10.
